# EUROPEAN PATENT APPLICATION

(11) **EP 4 685 857 A1**
(43) Date of publication of application: **28.01.2026**
(21) Application number: 24843466.4
(22) Date of filing: 15.07.2024
(51) Int. Cl.: H01M 4/04, B65H 43/04, G01B 21/04, G06Q 50/04

(54) **ROLL MAP GENERATION SYSTEM AND ROLL MAP GENERATION METHOD**

(30) Priority: 18.07.2023 KR 20230092804
(71) Applicant: LG Energy Solution, Ltd., Seoul 07335 (KR)
(72) Inventor: CHOI, Jae Ho, Daejeon 34122 (KR); KIM, Min Su, Daejeon 34122 (KR); CHOI, Ee Beom, Daejeon 34122 (KR)
(74) Representative: BCKIP Part mbB
(86) International application number: PCT/KR2024/010122
(87) International publication number: WO 2025/018750

(57) **Abstract**

Example embodiments provide a roll map generating system. The roll map generating system includes a first server configured to store electrode specification data including information about a process of an electrode sheet, a second server configured to generate an electrode specification file based on the electrode specification data, and a first processor configured to process measurement data of the electrode sheet, in which the second server is configured to transmit the electrode specification file to the first processor.

## Description

### [Technical Field]

The present invention relates to a system configured to generate a roll map indicating a lot that is a unit of a wound electrode sheet, and a roll map generating method. The present application claims the benefit of priority based on Korean Patent Application No. 10-2023-0092804, filed on July 18, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a system configured to generate a roll map including information about quality and defects in an electrode manufacturing process.

### [Technical Solution]

Example embodiments of the present invention provide a roll map generating system. The roll map generating system includes a first server configured to store electrode specification data including information about a process of an electrode sheet, a second server configured to generate an electrode specification file based on the electrode specification data, and a first processor configured to process measurement data of the electrode sheet, in which the second server is configured to transmit the electrode specification file to the first processor.

The electrode specification file may be in a JavaScript Object Notation (JSON) format.

A measurement condition of the first processor may be updated based on the electrode specification file.

The electrode specification data may include the number of coated lanes of the electrode sheet, the number of uncoated parts of the electrode sheet, a width of each of the coated lanes of the electrode sheet, and a width of each of the uncoated parts of the electrode sheet.

The roll map generating system may further include a sensing part configured to sense the electrode sheet to generate a measurement signal, and the first processor may be configured to collect the measurement data based on the measurement signal.

The roll map generating system may further include a sensing part configured to sense the electrode sheet to generate a measurement signal, and a second processor configured to collect the measurement data based on the measurement signal.

The roll map generating system may further include a first controller configured to collect coordinate data indicating a position on the electrode sheet, a second controller configured to control the process of the electrode sheet, and a third controller configured to relay communication between the first processor and the second processor.

The electrode specification file may be transmitted to the first processor by a message transmission method.

Example embodiments provide a roll map generating method. The roll map generating method includes generating an electrode specification file based on electrode specification data including information about a process of an electrode sheet, transmitting the electrode specification file to a processor, and updating a measurement condition of the processor based on the electrode specification file.

The electrode specification file may be in a JavaScript Object Notation (JSON) format.

The electrode specification file may be transmitted to the processor by a message transmission method.

The electrode specification data may include the number of coated lanes of the electrode sheet, the number of uncoated parts of the electrode sheet, a width of each of the coated lanes of the electrode sheet, and a width of each of the uncoated parts of the electrode sheet.

The processor may be configured to process measurement data of the electrode sheet based on the updated measurement condition.

The processing of the measurement data of the electrode sheet may include matching measured values of the measurement data to a plurality of sections of the electrode sheet.

The measured values of the measurement data may be matched to the plurality of sections of the electrode sheet, based on the number of the coated lanes of the electrode sheet, the number of the uncoated parts of the electrode sheet, the width of each of the coated lanes of the electrode sheet, and the width of each of the uncoated parts of the electrode sheet.

### [Advantageous Effects]

According to example embodiments of the present invention, a system for generating a roll map that enables feedback, feed forward, and tracking of an electrode process can be provided.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a roll map generating system according to example embodiments.
FIG. 2 is a plan view of a part of an electrode sheet.
FIG. 3 is a flowchart of a roll map generating method according to example embodiments.
FIG. 4 illustrates a roll map generating system according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment: Device, Second Embodiment: Method)

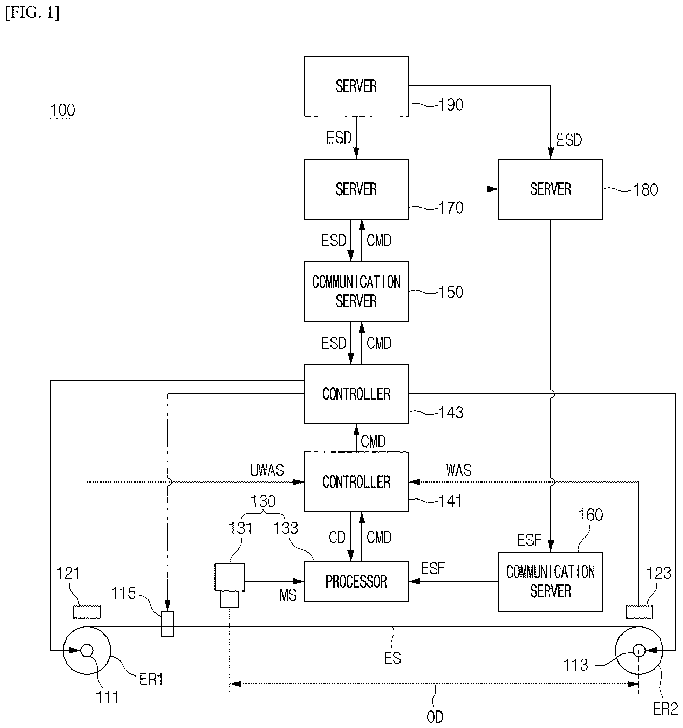

FIG. 1 illustrates a roll map generating system 100 according to example embodiments.

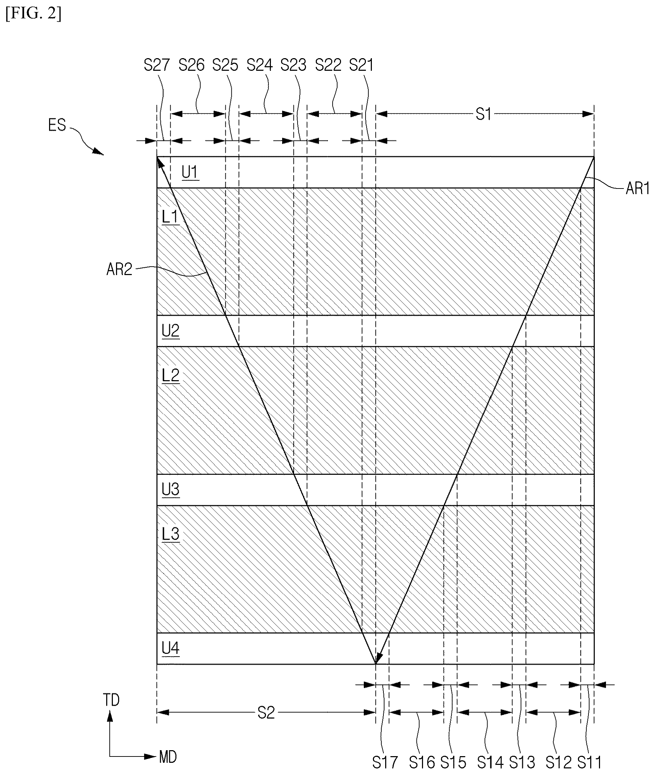

FIG. 2 is a plan view of a part of an electrode sheet ES.

Referring to FIGS. 1 and 2, the roll map generating system 100 may include an unwinder 111, a rewinder 113, a processing apparatus 115, a first rotary encoder 121, a second rotary encoder 123, a measuring device 130, a first controller 141, a second controller 143, communication servers 150 and160, and servers 170, 180, and 190.

The roll map generating system 100 may be configured to generate a roll map including data about an electrode sheet ES. The roll map may represent the electrode sheet ES based on coordinates indicating a position on the electrode sheet ES. A secondary battery manufacturing process may be performed on the electrode sheet ES. The roll map may include data that represents a history of processes performed on the electrode sheet ES and is related to coordinates. Accordingly, the roll map enables feedback, feedforwarding, and tracking of the secondary battery manufacturing process as described below.

A first electrode roll ER1 on which a previous process is performed may be loaded on the unwinder 111. The unwinder 111 may be configured to unwind the electrode sheet ES from the first electrode roll ER1. The rewinder 113 may be configured to wind the electrode sheet ES to form a second electrode roll ER2. Accordingly, the electrode sheet ES may be moved between the unwinder 111 and the rewinder 113. An electrode process is performed on the electrode sheet ES unwound from the first electrode roll ER1 and wound into the second electrode roll ER2 and thus may be a roll-to-roll process.

Roll maps may be generated in units of lots. The electrode sheet ES may be wound into the second electrode roll ER2 and be cut and separated after a certain winding length is reached. A lot is a production unit of the roll-to-roll process, and the separated second electrode roll ER2 is an example of lot. Accordingly, the server 170 may be configured to store a roll map of a previous process. The roll map of the previous process may correspond to the first electrode roll ER1. In addition, the server 170 may be configured to generate and store a roll map of a current process. The roll map of the current process may correspond to the second electrode roll ER2.

In a roll map, time series data constructed over time (i.e., according to the progress of a process) may be related to coordinate data CD collected based on the amount of movement (i.e., the amount of winding or the amount of unwinding) of the electrode sheet ES.

The manufacture of a secondary battery involves a series of different processes, and a leading process affects the following process. In this case, when time series data of the leading process does not directly match a workpiece, an intermediate product, and a product of the real world, it may be difficult to reflect the time series data of the leading process in the following process. Hereinafter, correcting the following process on the basis of data generated according to a result of the leading process may be referred to as feedforward.

Here, the workpiece may be an article provided as a result of each process, e.g., the electrode sheet ES of FIG. 1 on which the coating process, the roll pressing process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product may be an article processed by the activation process to be operable as a secondary battery. The above-described definitions of the workpiece, the intermediate product, and the product are definitions thereof only in one aspect and thus should not be understood as excluding general definitions thereof.

For feed forwarding, time series data should be related to positions on real-world workpieces, components, intermediate products, and products. The roll map may allow time series data to be related with coordinate data including coordinates of the positions on the real-world workpieces, the components, the intermediate products, and the products. The roll map may provide matching between time series data and the real-world workpieces, the components, the intermediate products, and the products, based on the coordinate data. Accordingly, feedforwarding based on generation of the roll map and the roll map may improve the productivity and quality of the secondary battery manufacturing process by digitizing and objectifying aspects of a process that depend on an operator's discretion. A roll map of a preceding lot may be used to improve a process of a following lot, and this operation may be referred to as process feedback. The process feedback using the roll map may include identifying process conditions and process parameters that cause a problem and a defect, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event such as a quality issue occurs in an already shipped battery cell, history data of the manufacture of the battery cell may be retrieved based on the cell ID to identify a cause of a problem in the manufacture of the battery cell.

The electrode sheet ES may be processed by the processing apparatus 115. For example, the processing apparatus 115 may include a coater, and the electrode sheet ES may be coated with an electrode slurry. As another example, the processing apparatus 115 may include a pressing roll, and the roll pressing process may be performed on the electrode sheet ES coated with the electrode slurry. As another example, the processing apparatus 115 may include a splicing die and a scrap port, and a part of the electrode sheet ES may be scrapped. As another example, the processing apparatus 115 may include a slitting knife, and the electrode sheet ES may be separated into a plurality of electrode sheets.

The coating process is a process of applying a coating material such as the electrode slurry onto the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet having the broad width may be cut according to the specifications of a battery cell.

The first rotary encoder 121 may be configured to sense the amount of the electrode sheet ES unwound from the first electrode roll ER1 by the unwinder 111. Accordingly, the first rotary encoder 121 may be configured to generate an unwinding amount signal UWAS indicating the amount of unwinding the electrode sheet ES. The first rotary encoder 121 may be configured to transmit the unwinding amount signal UWAS to the first controller 141. The first controller 141 may be configured to collect unwinding amount data based on the unwinding amount signal UWAS of the electrode sheet ES.

The second rotary encoder 123 may be configured to sense the amount of the electrode sheet ES wound into the second electrode roll ER2 by the rewinder 113. Accordingly, the second rotary encoder 123 may be configured to generate a winding amount signal WAS indicating the amount of winding the electrode sheet ES. The second rotary encoder 123 may be configured to transmit the winding amount signal WAS to the first controller 141. The first controller 141 may be configured to collect winding amount data based on the winding amount signal WAS of the electrode sheet ES.

In some cases, a part of the electrode sheet ES may be scraped and thus the amount of the electrode sheet ES unwound by the unwinder 111 may be different from the amount of the electrode sheet ES wound by the rewinder 113. When the electrode sheet ES is elongated due to pressure in the roll pressing process, the amount of the electrode sheet ES unwound by the unwinder 111 may be different from the amount of the electrode sheet ES wound by the rewinder 113.

The first controller 141 may be configured to collect the coordinate data CD of the electrode sheet ES, based on one of the winding amount signal WAS and the unwinding amount signal UWAS of the electrode sheet ES. For example, the first controller 141 may determine a moving distance of the electrode sheet ES in a current process step based on the winding amount signal WAS of the electrode sheet ES. Accordingly, a coordinate indicating a position of a part of the electrode sheet ES, which is to be wound by the rewinder 113, on the electrode sheet ES may be determined at each point in time when the roll-to-roll process is performed on the electrode sheet ES. Furthermore, by calibrating coordinates using an offset distance, a relative position of each of processed or sensed parts of the electrode sheet ES on the electrode sheet ES may be identified. Hereinafter, the technical idea of the present invention will be described with respect to an embodiment in which the first controller 141 collects the coordinate data CD based on the winding amount signal WAS of the electrode sheet ES.

The coordinate data CD may include coordinates matching each part of the electrode sheet ES. That is, each of arbitrary points on the electrode sheet ES may match a coordinate. The coordinate may be one-dimensional (1D) quantity in a machine direction MD (or a longitudinal direction) of the electrode sheet ES but is not limited thereto. The coordinate may be a two-dimensional (2D) quantity in the machine direction MD and a transverse direction TD (or a width direction) of the electrode sheet ES.

A sensing part 131 of the measuring device 130 may be configured to measure the electrode sheet ES to collect measurement data of the electrode sheet ES. The sensing part 131 may measure the electrode sheet ES by a scanning method. The sensing part 131 may be configured to scan the electrode sheet ES in the transverse direction TD. While the measuring device 130 performs scanning in the transverse direction TD, the electrode sheet ES may be moved in the machine direction MD by the unwinder 111 and the rewinder 113.

In FIG. 2, arrows AR1 and AR2 indicate a movement of the sensing part 131 of the measuring device 130 relative to the electrode sheet ES. The arrow AR1 indicates scanning performed by the sensing part 131 from a first edge of the electrode sheet ES to a second edge of the electrode sheet ES in the transverse direction TD, and the arrow AR2 indicates scanning performed by the sensing part 131 from the first edge of the electrode sheet ES to the second edge of the electrode sheet ES in the transverse direction TD.

Here, coated lanes L1, L2, and L3 are parts of the electrode sheet ES that are coated with an electrode slurry, and uncoated parts U1, U2, U3, and U4 are parts of the electrode sheet ES that are not coated with the electrode slurry. The uncoated parts U1, U2, U3, and U4 may be interposed between the coated lanes L1, L2, and L3 or be on opposite ends of the electrode sheet ES in the transverse direction TD.

The measurement data may include a plurality of measured values expressed numerically. For example, the measurement data may include dimension data, e.g., a thickness and a width of the electrode sheet ES, data of the amount of loading a coating material on the electrode sheet ES, dimension data, e.g., a width of an insulating material on the coating material and an overlapping width between the coating material and the insulating material, mismatch data between the coated lanes L1, L2 and L3 on an upper surface of the electrode sheet ES and the coated lanes L1, L2 and L3 on a lower surface of the electrode sheet ES, and the like. Here, the amount of loading is the amount of the coating material loaded per unit area of the electrode sheet ES, and may be an area density of the coating material.

The measuring device 130 may include the sensing part 131 and a processor 133. The sensing part 131 may be configured to sense a physical quantity of the electrode sheet ES to generate a measurement signal MS. For example, the sensing part 131 may include a time delay and integration (TDI) camera, a complementary metal oxide semiconductor (CMOS) image sensor, a time-of-flight (TOF) sensor, etc. The sensing part 131 may include an emitter and a receiver that are configured to perform measurement using a non-destructive signal such as ultrasound waves, microwaves, terahertz waves, or infrared rays. The sensing part 131 may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 130 may include a pressure sensor, a temperature sensor, an ultrasonic sensor, a proximity sensor, a door state sensor, a motion tracking sensor, a humidity sensor, a visible light and infrared sensor, a camera, etc.

Hereinafter, the technical idea of the present invention will be described with respect to, as a non-limiting example, an embodiment in which the measuring device 130 is a loading amount measuring device configured to measure the amount of loading a coating layer on a sheet material SM (e.g., a web gauge of Thermofisher Scientific) or a thickness gauge. Those of ordinary skill in the art would be able to derive an embodiment in which the measuring device includes one of the above-described sensors and is configured to sense one of the above-described measured amounts.

The roll map generating system 100 may further include an inspector configured to inspect the electrode sheet ES to collect inspection data. The inspection data may include a result of judging the quality of a part of the electrode sheet ES and a process event. For example, the inspection data may include data about the appearance of the electrode sheet ES collected by an image-based inspection device such as a vision machine, data about disconnections and seams on the electrode sheet ES, data about a part of the electrode sheet ES on which sampling inspection is performed, data about a part of the electrode sheet ES to be scrapped, data about the scraped part of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects. The datum points may be formed on the electrode sheet ES at certain intervals, and other elements on the electrode sheet ES may be located based on the datum points. The inspector may be a color sensor, a joint sensor, a datum point sensor, or a vision machine.

The measurement data and the inspection data described above may be time series data. The measurement data and the inspection data may be temporally ordered. Temporal ordering is a main feature of time series data. Temporal ordering is organizing events in an order in which they occur and arrive to be processed. That is, the measurement data and the inspection data may be stored based on a point in time when measurement and inspection are performed, and may be related to time. Accordingly, each of measured values of the measurement data may be matched to time, and each of inspection values of the inspection data may be matched to time.

For example, measurement data (e.g., data of an amount of loading on the electrode sheet ES or thickness data of the electrode sheet ES) may include a series of measured values (e.g., values of the amount of loading on the electrode sheet ES or thickness values of the electrode sheet ES) and time values related to the series of measured values. The measured values and the time values may be matched in a one-to-one manner but are not limited thereto. As another example, defect data may include a value indicating a defect and a time value related to the value indicating the defect. Here, the values indicating defects should be understood to mean that the values include information regarding at least one of the presence of defects and the types of defects.

The processor 133 may be configured to collect measurement data based on the measurement signal MS sensed by the sensing part 131. The processor 133 may be connected to the sensing part 131 by wire or wirelessly. The processor 133 may be configured to calibrate the measurement data by adding an offset measurement amount to each of the measured values of the measurement data. Due to the progress of a process and the aging of equipment, the measured values of the measurement data may be different from actual values. The processor 133 may calibrate the measured values of the measurement data based on the offset measurement amount to improve the reliability of the roll map generating system 100 and a roll map generating method. The offset measurement amount may be determined based on information given to an equipment system by a method such as a sample test.

According to example embodiments, the processor 133 may be configured to receive the electrode specification file ESF. The electrode specification file ESF may be transmitted to the processor 133 from the server 180 described below through the communication server 160. A file format of the electrode specification file ESF may be a JavaScript Object Notation (JSON) format but is not limited thereto. The electrode specification file ESF may be in an arbitrary file format allowing data to be stored based text, such as an extendable markup language (XML), a common separated value (CSV), a resource description framework (RDF), a spreadsheet, an open document format (ODF), a portable document format (PDF), a plane text file, or a hypertext markup language (HTML).

The electrode specification file ESF may be stored in the processor 133. The electrode specification file ESF may be stored in a memory device of the processor 133. The memory device of the processor 133 may include an electrically erasable programmable read-only memory (EPROM), a solid state drive (SSD), or a hard disk drive (HDD).

The electrode specification file ESF may include information of a process performed on the electrode sheet ES. More specifically, the electrode specification file ESF may include the number of the coated lanes L1, L2, and L3, the number of uncoated parts U1, U2, U3, and U4, a width of each of the coated lanes L1, L2, and L3, a width of each of the uncoated parts U1, U2, U3, and U4, and a range of normal measurement amounts (i.e., loading amounts or thicknesses).

The processor 133 may be configured to update measurement conditions based on the electrode specification file ESF. The measurement conditions may include the number of the coated lanes L1, L2, and L3, the number of uncoated parts U1, U2, U3, and U4, the width of each of the coated lanes L1, L2, and L3, the width of each of the uncoated parts U1, U2, U3, and U4, and the range of normal measurement amounts (i.e., loading amounts or thicknesses).

When a recipe for the electrode sheet ES is updated due to a change of a model of a battery cell to be manufactured, the measurement conditions of the measuring device 130 should also be updated. For example, when there is a change in specifications of a battery cell to be manufactured through the electrode sheet ES, the processing of the electrode sheet ES and the processing of the measurement data are changed accordingly.

For example, as shown in FIG. 2, the processing of measurement data MED collected from the electrode sheet ES including three coated lanes L1, L2, and L3 may be different from the processing of measurement data collected from an electrode sheet including only a single coated lane. For more precise feedforward after a secondary battery manufacturing process and a coating process, parts of the measurement data should be matched to objects to be collected for matching between the parts of the measurement data and the coated lanes L1, L2, and L3. In addition, the matching of parts of the measurement data with coated lanes L1, L2, and L3 allows for the individual scrapping of the coated lanes L1, L2, and L3 in the event of defects, thereby improving the productivity and yield of the secondary battery manufacturing process.

For matching between a first part of the measurement data collected from the coated lane L1 and the coated lane L1, it should be identified that the first part of the measurement data has been collected from the coated lane L1. For matching between a second part of the measurement data collected from the coated lane L2 and the coated lane L2, it should be identified that the second part of the measurement data has been collected from the coated lane L2. For matching between a third part of the measurement data collected from the coated lane L3 and the coated lane L3, it should be identified that the third part of the measurement data has been collected from the coated lane L3.

For matching between the parts of the measurement data and the coated lanes L1, L2, and L3, the processor 133 may be configured to process the measurement data based on updated measurement conditions. By updating the measurement conditions, the processor 133 may be aware of the collection of the measurement data the coated lanes L1, L2, and L3 and thus be configured to perform an operation for identifying an object of the collection of the measurement data. Furthermore, the electrode sheet ES may be determined as defective when the number of coated lanes set according to the electrode specification data ESD or the electrode specification file ESF (i.e., the number of coated lanes to be formed on the electrode sheet ES by a die coater) is different from the number of sensed coated lanes.

Conventionally, the electrode specification data ESD of the server 190 that includes an ID of a model and a recipe of the model is not automatically updated by the measuring device 130, and measurement conditions are manually updated by an operator. Manual updates by operators may lead to misspecification of measurement conditions, and such misspecification of measurement conditions may result in large-scale judgment errors regarding the quality of the electrode sheets ES.

According to example embodiments, the server 180 may be configured to generate the electrode specification file ESF based on the electrode specification data ESD transmitted from the server 190. The electrode specification file ESF may be transmitted to the processor 133 through the communication server 160. Because the measurement conditions of the processor 133 are automatically updated based on the electrode specification file ESF, misspecification of the measurement conditions may be prevented and the reliability of a roll map may be improved.

The processor 133 may be configured to calculate a widths of the coated lanes L1, L2, and L3 based on the measurement data. When the number of a series of measured values of the electrode sheet ES that are greater than or equal to a threshold among the measured values of the measurement data is greater than or equal to a set number, the processor 133 may match data points subsequent to the series of measured values greater than or equal to a threshold to coated parts. Similarly, when the number of a series of measured values of the electrode sheet ES that are less than the threshold among the measured values of the measurement data is greater than or equal to the set number, the processor 133 may match measured values of the electrode sheet ES subsequent to the series of measured values less than the threshold to uncoated parts.

The processor 133 may be configured to compare the measurement data with the electrode specification file ESF. More specifically, the processor 133 may be configured to compare the number of the coated lanes L1, L2, and L3, the number of the uncoated parts U1, U2, U3, and U4, the width of each of the coated lanes L1, L2, and L3, and the width of each of the uncoated parts U1, U2, U3, and U4, which are determined based on the measurement data, with the information of the process of the electrode sheet ES of the electrode specification file ESF. The processor 133 may be configured to determine whether the electrode sheet ES is defective, based on the measurement data and the electrode specification file ESF.

The processor 133 may be configured to identify incorrect measurement data, based on the measurement data and the electrode specification file ESF. Examples of incorrect measurement data may include misrecognition of positions of uncoated parts and coated parts, failure to sense a measurement amount (i.e., the amount of loading or a thickness), and the like. In general, the amount of loading and a thickness may be measured by a thermodynamic method and be incorrectly sensed due to thermal phenomena induced by various aspects of the process.

The first controller 141 may be in operative communication with the first and second rotary encoders 121 and 123, the measuring device 130, and additional measuring devices and inspectors through a wired or wireless data network. The data network may be unidirectional or bidirectional. The data network may be implemented by a physical channel, WiFi, public networks and/or specialized networks using Bluetooth or other frequency bands.. The first and second rotary encoders 121 and 123, the measuring device 130, and the additional measuring devices and inspectors may be configured to collect data from equipment, a workpiece, an intermediate product, and a product in the roll map generating system 100 or to generate a signal for collecting data therefrom.

The first controller 141 may be configured to transmit the coordinate data CD to the processor 133. The processor 133 may be configured to connect the coordinate data CD with the measurement data to generate coordinate-related measurement data CMD. In general, the measurement data may be processed based on a trigger point.

As a non-limiting example, a trigger point for processing the measurement data may be the completion of scanning. For example, the sensing part 131 may scan the electrode sheet ES in the width direction of the electrode sheet ES, and the measurement data may be stored, processed, manipulated, and transmitted whenever scanning is performed. As another example, the trigger point may be completion of performing scanning a plurality of times or partial completion of scanning. Examples of the processing of the measurement data may include storing the measurement data, manipulating the measurement data (e.g., generating the coordinate-related measurement data CMD), and transmitting the measurement data.

According to example embodiments, the measuring device 130 may be configured to calibrate the coordinate data CD, based on a position of the measuring device 130. More specifically, the measuring device 130 may be configured to calibrate the coordinate data CD based on an offset length OD, so that coordinates of the coordinate data CD may be related with the measured values of the measurement data.

The measuring device 130 may collect measurement data of a part corresponding to (e.g., overlapping) the sensing part 131 and the coordinate data CD is collected by the second rotary encoder 123 spaced apart from the sensing part 131 as described above, and thus, the parts of the electrode sheet ES corresponding to the winding amount signal WAS and the measurement signal MS, which are generated simultaneously, may differ.

According to example embodiments, the processor 133 may calibrate the coordinate data CD, which is collected at the same time as the measurement data, based on the offset length OD to collect the coordinate-related measurement data CMD, and connect the calibrated coordinate data CD with representative values calculated from the measurement data. The measured values of the measurement data may be matched to time, and representative values of the coordinate-related measurement data CMD may be matched to calibrated coordinates.

A plurality of guide rolls may be interposed between the sensing part 131 and the rewinder 113 to define a moving path of the electrode sheet ES. Accordingly, the offset length OD may be defined as a length of the electrode sheet ES between the sensing part 131 and the rewinder 113 according to the moving path of the electrode sheet ES. The offset length OD may be equal to or greater than a straight line distance between the sensing part 131 and the rewinder 113.

The processor 133 may be configured to collect the coordinate-related measurement data CMD based on the measurement data and the coordinate data CD. The electrode sheet ES may include a plurality of scanning regions S1 and S2. Each of the plurality of scanning regions S1 and S2 is a part of the electrode sheet ES inspected when scanning is performed once by the sensing part 131. The scanning region S1 may include a plurality of sections S11, S12, S13, S14, S15, S16, and S17. The scanning region S2 may include a plurality of sections S21, S22, S23, S24, S25, S26, and S27.

The coordinate-related measurement data CMD may include representative values calculated from measured values of each of the plurality of sections S11, S12, S13, S14, S15, S16, S17, S21, S22, S23, S24, S25, S26, and S27 of the electrode sheet ES. The representative values of each of the plurality of sections S11, S12, S13, S14, S15, S16, S17, S21, S22, S23, S24, S25, S26, and S27 of the electrode sheet ES may include at least one among an average, a standard deviation, a median value, a maximum value, or a minimum value.

The coordinate-related measurement data CMD may include a start coordinate and an end coordinate of each of the sections S11, S12, S13, S14, S15, S16, S17, S21, S22, S23, S24, S25, S26, and S27 of the electrode sheet ES. The representative values of the coordinate-related measurement data CMD may be matched to the start coordinate and the end coordinate of a corresponding one among the sections S11, S12, S13, S14, S15, S16, S17, S21, S22, S23, S24, S25, S26, and S27.

The sections S11 and S21 may correspond to the uncoated part U1. The sections S12 and S22 may correspond to the coated lane L1. The sections S13 and S23 may correspond to the uncoated part U2. The sections S14 and S24 may correspond to the coated lane L2. The sections S15 and S25 may correspond to the uncoated part U3. The sections S16 and S26 may correspond to the coated lane L3. The sections S17 and S27 may correspond to the uncoated part U4.

To calculate representative values of the coordinate-related measurement data CMD, the processor 133 may be configured to match the measured values of the measurement data. When the number of a series of measured values of the electrode sheet ES that are greater than or equal to a threshold among the measured values of the measurement data is greater than or equal to the set number (e.g., 5), the processor 133 may be configured to match data points subsequent to the series of measured values greater than or equal to a threshold to the coated lanes L1, L2 and L3. Similarly, when the number of a series of measured values of the electrode sheet ES that are less than the threshold among the measured values of the measurement data is greater than or equal to the set number, the processor 133 may match measured values of the electrode sheet ES subsequent to the series of measured values less than the threshold to the uncoated parts U1, U2, and U3.

For example, when the section S11 is scanned, the measured values of the electrode sheet ES may be less than or equal to the threshold, and measurement data collected from the section S11 may be determined to be collected from the uncoated part U1 and be matched to the section S11.

When the section S12 is scanned after the scanning of the section S11, the number of a series of subsequent measured values of the electrode sheet ES that are greater than or equal to the threshold is greater than or equal to the set number and thus measurement data collected from the section S12 may be determined to be collected from the coated lane L1 and be matched to the section S12.

When the section S13 is scanned after the scanning of the section S12, the number of a series of subsequent measured values of the electrode sheet ES that are less than the threshold is greater than or equal to the set number and thus measurement data collected from the section S13 may be determined to be collected from the uncoated part U2 and be matched to the section S13.

When the section S14 is scanned after the scanning of the section S13, the number of a series of subsequent measured values of the electrode sheet ES that are greater than or equal to the threshold is greater than or equal to the set number and thus measurement data collected from the section S14 may be determined to be collected from the coated lane L2 and be matched to the section S14.

When the section S15 is scanned after the scanning of the section S14, the number of a series of subsequent measured values of the electrode sheet ES that are less than the threshold is greater than or equal to the set number and thus measurement data collected from the section S15 may be determined to be collected from the uncoated part U3 and be matched to the section S15.

When the section S16 is scanned after the scanning of the section S15, the number of a series of subsequent measured values of the electrode sheet ES that are greater than or equal to the threshold is greater than or equal to the set number and thus measurement data collected from the section S16 may be determined to be collected from the coated lane L3 and be matched to the section S16.

When the section S17 is scanned after the scanning of the section S16, the number of a series of subsequent measured values of the electrode sheet ES that are less than the threshold is greater than or equal to the set number and thus measurement data collected from the section S17 may be determined to be collected from the uncoated part U4 and be matched to the section S17.

Matching between measurement data collected from the sections S21, S22, S23, S24, S25, S26, and S27 of the scanning region S2 is substantially the same as that described above with respect to the sections S11, S12, S13, S14, S15, S16, and S17 of the scanning region S1.

The processor 133 may be configured to match the measured values of the measurement data of the electrode sheet ES to the corresponding sections S11, S12, S13, S14, S15, S16, S17, S21, S22, S23, S24, S25, S26, and S27 and to calculate a representative value of measured values of each of the sections S11, S12, S13, S14, S15, S16, S17, S21, S22, S23, S24, S25, S26, and S27.

The calculating of the representative value of each of the sections S11, S12, S13, S14, S15, S16, S17, S21, S22, S23, S24, S25, S26, and S27 may be based on measurement conditions updated according to the electrode specification file ESF. That is, the measurement condition of the processor 133 may be updated based on the number of the coated lanes L 1, L2, and L3, the number of the uncoated parts U1, U2, U3, and U4, the width of each of the coated lanes L1, L2, and L3, the width of each of the uncoated parts U1, U2, U3, and U4, and the range of normal measurement amounts (i.e., loading amounts or thicknesses) of the electrode specification file ESF, and the processor 133 may process the measurement data to calculate a representative value of each of the sections S11, S12, S13, S14, S15, S16, S17, S21, S22, S23, S24, S25, S26, and S27 based on the updated measurement conditions. Accordingly, the reliability of processing the measurement data of the electrode sheet ES may be improved.

The processor 133 may be configured to generate evaluation data based on the coordinate-related measurement data CMD. The evaluation data may include a judgement value of a process of each of a plurality of sections of the electrode sheet ES. The judgement value of the process of each of the plurality of sections of the electrode sheet ES may be determined based on a comparison between a set range and measured values (or a representative value of the measured values).

For example, a representative value within a first range may be determined to be normal, a representative value within a second range greater than the first range may be determined to be excessive, a representative value within a third range greater than the second range may be determined to be very excessive, a representative value within a fourth range less than the first range may be determined to be insufficient, and a representative value within a fifth range less than the fourth range may be determined to be very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 133 may be configured to transmit the coordinate-related measurement data CMD to the first controller 141. The coordinate-related measurement data CMD transmitted to the second controller 143 may be transmitted to the server 170 through the communication server 150. The second controller 143 and the communication server 150 may relay communication of data, including the coordinate-related measurement data CMD, between the server 170 and the first controller 141. However, embodiments are not limited thereto. The first controller 141 may directly transmit the coordinate-related measurement data CMD to the server 170.

The second controller 143 may be configured to control operations of the unwinder 111, the rewinder 113, and the processing apparatus 115. The second controller 143 may be configured to generate a signal for operating or stopping the unwinder 111, the rewinder 113, and the processing apparatus 115. The signal for operating or stopping the unwinder 111, the rewinder 113, and the processing apparatus 115 may be generated based on the electrode specification data ESD.

For control of a process, a communication line for connecting the second controller 143 and the server 170 via the communication server 150 may be installed between the second controller 143 and the server 170. Accordingly, data transmission through the second controller 143 may reduce resources required for the installation of the communication line and ensure efficient data processing and management, compared to a case in which the first and second rotary encoders 121 and 123 and the measuring device 130 directly transmit an unwinding amount signal UWAS, a winding amount signal WAS, and the measurement signal MS to the first server 170 and a case in which the first controller 141 directly transmits the coordinate-related measurement data CMD and the evaluation data to the server 170.

The communication server 150 may include a program for communication between the second controller 143 of the manufacturing equipment and the server 170. The communication server 150 may be implemented by hardware as described below. A language and protocol of the server 170 may be different from a language and protocol of the second controller 143. For example, the language of the server 170 may be SQL, and the language of the second controller 143 may be a ladder diagram.

The communication server 150 may be configured to convert the electrode specification data ESD transmitted from the server 170 into the language of the second controller 143. In addition, the communication server 150 may be configured to convert the coordinate-related measurement data CMD into the language of the server 170 and record the coordinate-related measurement data CMD in a database of the server 170.

The electrode specification data ESD may include a product ID and a recipe that identify a model of a product to be manufactured using the electrode sheet ES. More specifically, the recipe of the electrode specification data ESD may include all matters related to the process of the electrode sheet ES, e.g., the number of lots to be processed in a current process, the number of coated lanes to be formed on the electrode sheet ES, process conditions such as temperature, humidity, and pressure, and process parameters such as a moving speed of the electrode sheet ES, a discharge amount of a coating die, and pressure of pressing rolls.

The server 170 may be configured to generate a roll map. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES. A roll map may include the coordinate-related measurement data CMD described above. The roll map may further include inspection data matching the coordinates of the coordinate data CD and additional measurement data matching the coordinates of the coordinate data CD.

According to example embodiments, the server 170 may be a data processing system that supports all activities required to manage the manufacture of a secondary battery, such as work schedule management, work instructions, quality control, and work performance aggregation. The server 170 may be, for example, manufacturing execution system (MES) software. The server 170 may be configured to perform inputting, processing, outputting, and communication of data necessary for the manufacture of electrodes, including the coating process, a press process, and a slitting process.

The processor 133 may be configured to transmit measurement data to the server 180. According to example embodiments, the roll map generating system 100 may include an additional communication server for relaying transmission of the measurement data between the processor 133 and the server 180.

The server 180 may be configured to store and process raw measurement data of the electrode sheet ES. The server 180 may be configured to continuously monitor the processing of the electrode sheet ES based on the measurement data to manage the quality of processing the electrode sheet ES. According to example embodiments, the server 180 may be a statical process controller (SPC). The server 180 may collect and analyze manufacturing data in almost real time to identify problematic conditions in a timely manner and provide a notification to an operator before potential problems occur.

The server 190 may be a solution to managing all information and processes at all stages of life cycles of products or services of a whole global supply chain. The server 190 may be, for example, a product lifecycle management (PLM) solution. The server 190 may be configured to store data about items, components, products, manuals, requirements, engineering change orders, quality, and workflows. The server 190 may be configured to generate and store electrode specification data ESD. The server 190 may be configured to transmit the electrode specification data ESD to the first and the servers 170 and 180.

The processor 133, the first controller 141, the second controller 143, the communication server 150, the communication server 160, the server 170, the server 180, and the server 190 may be implemented by hardware, firmware, software, or a combination thereof. For example, the processor 133, the first controller 141, the second controller 143, the communication server 150, the communication server 160, the server 170, the server 180, and the server 190 may include computing devices such as workstation computers, desktop computers, laptop computers, and tablet computers. The processor 133, the first controller 141, the second controller 143, the communication server 150, the communication server 160, the server 170, the server 180, and the server 190 may include one of a simple controller, a complex processor such as a microprocessor, a CPU or a GPU, a processor configured by software, dedicated hardware, and firmware. The processor 133, the first controller 141, the second controller 143, the communication server 150, the communication server 160, the server 170, the server 180, and the server 190 may be implemented by, for example, a general-purpose computer or application-specific hardware such as a digital signal processor (DSP), a field programmable gate array (FPGA) and an application-specific integrated circuit (ASIC).

The servers 170 and 180 may be configured to generate a roll map and an intermediate roll map. The server 170 stores and processes a large amount of data about general manufacturing and management processes in addition to the roll map, and thus, the roll map stored in the server 170 may include processed and simplified coordinate-related measurement data CMD instead of raw measurement data. The server 180 may be configured to store raw measurement data to operate as an SPC. The server 180 may transmit measurement data corresponding to a selected portion of the roll map in response to a command from the server 170.

The intermediate roll map may further include measurement data related to the roll map. That is, the intermediate roll map may further include measurement data, which is raw data, in addition to the roll map. The measurement data may be related with the roll map based on a time value. Accordingly, the intermediate roll map may provide additional insights into the quality of a workpiece, the performance of a process, overall equipment effectiveness (OEE) drill down, sensing of anomality, traceability, preventive maintenance, and predictive alerts.

The server 170, the server 180, and the server 190 may include a physical server or a cloud server. The server 170, the server 180, and the server 190 may provide an operator with data and analysis results through various frameworks. A framework may include a protocol supporting data transmission so that a display device may visualize data through a user interface and provide updated visualization when new data is calculated by the servers 170 and 180. The protocol supporting data transmission may use HTML, JavaScript, and/or JSON.

The servers 170, 180 and 190 may include various application programming interfaces (APIs) for storing data in a database and other data management tools. The APIs may also be used to retrieve data from databases of various data management systems. The data management systems may provide access to a database, pull or retrieve data from the database, and generate metrics. The metrics include measured values generated in a time-series manner and may be used to monitor applications and generate a status warning.

The roll map generating system 100 may implement a plug-in architecture with an API for obtaining data to provide a plug-and-play connection between the measuring device 130 and additional measuring devices and inspectors. Accordingly, resources in a certain process step and a specific site can be easily transferred to a different process and different site or new resources can be easily introduced into each process step and each site.

A data network between the components of the roll map generating system 100 may include various types of communication channels including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the roll map generating system 100 may further include a manual input system that allows an operator to input manufacturing data. The roll map generating system 100 may allow an operator to input data using an input tool and a computer-based input of manufacturing data such as Excel file scraping.

According to some embodiments, the operations of the processor 133, the first controller 141, the second controller 143, the communication server 150, the communication server 160, the server 170, the server 180, and the server 190 may be implemented as instructions stored on a machine-readable medium that is readable and executable by one or more processors. Here, the machine-readable medium may include an arbitrary apparatus for storing and/or transmitting information in a form readable by a machine (e.g., a computing device). For example, machine-readable media may include a read-only memory (ROM), a random access memory (RAM), a magnetic disk storage medium, an optical storage medium, a flash memory, electrical, optical, acoustic, or other types of radio signals (e.g., carrier waves, infrared signals, digital signals, etc.), and other signals.

The processor 133, the first controller 141, the second controller 143, the communication server 150, the communication server 160, the server 170, the server 180, and the server 190 may include firmware, software, routines, and instructions to perform the above-described operations or processes to be described below. For example, the processor 133, the first controller 141, the second controller 143, the communication server 150, the communication server 160, the server 170, the server 180, and the server 190 may be instantiated in a memory.

The first and second controllers 141 and 143 may be, for example, programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a central process unit (CPU), an input interface, an output interface, a communication interface, and first and second memory devices. The power supply may be configured to supply operating power to the CPU, the input module, the output module, the communication interface, and the first and second memory devices. The first memory device may be configured to store a system program of the PLC. The first memory device may be, for example, a read-only memory (ROM) and be configured to permanently store data for an operating system of the second controller 143. The second memory device may be configured to store a user program and data. The user program may be a program set by a user so that the CPU may perform a specific function. The data may include the coordinate-related measurement data CMD and the coordinate data CD described above. The second memory device may be configured to further store state information of states of input and output devices, and values of a timer, a counter, and other internal devices. The second memory device may be, for example, a random access memory (RAM).

The CPU may be configured to control communication between modules that implement logic and convert an input signal into an output operation signal. The CPU may operate based on the system program stored in the first memory device. The CPU may be configured to manipulate data based on the user program stored in the second memory device.

When the PLC operates, the CPU may be configured to scan current input conditions and the data and store them in a memory device. Next, the CPU may be configured to read and execute the user program step by step and then transmit a result to one of an output module, a communication module, and a memory device.

The input module and the output module perform isolation and signal conditioning and thus sensors and actuators may be directly connected to the input module and the output module without other circuits. The input module and the output module may be configured to transmit data between the CPU and an external device.

Conditions and data of industrial devices and production processes may be transmitted to the CPU through the input module. A result of processing performed by the CPU may be transmitted to an actuator through the output module. The input module may include, for example, a mechanical switch for position sensing, a proximity switch, a photoelectric switch, an encoder, a temperature and pressure switch, a potentiometer, a linear variable differential transformer, a strain gauge, a thermistor, a thermal transistor, and digital and analog devices such as an AC/DC thermocouple switch. The input module may provide an interface between the input device and a CPU operating based on a low DC voltage. Some input devices may generate an analog signal that is in a high-voltage range. The input module may be configured to convert the signal generated by the input device into a voltage that is in a range acceptable by the CPU.

The output module may be configured to generate a signal for control of an operation of an actuator. The output module may include a relay, a transistor, and a triac. The output module may include a relay, a contactor, a solenoid valve, a motor, and the like.

However, the above components are only examples for convenience of description, and the processor 133, the first controller 141, the second controller 143, the communication server 150, the communication server 160, the server 170, the server 180, and the server 190 described above may also result from computing devices, distributed computing devices, processors, firmware, software, routines, and other devices executing routines, and instructions.

An architecture configured to generate a roll map and an intermediate roll map may be implemented by adding only the first controller 141 to the processor 133, the second controller 143, the communication server 150, the server 170, the communication server 160, the server 180, and the server 190, which are essential elements in modern process management systems. That is, in the roll map generating system 100 according to example embodiments, resources of an already-installed manufacturing site can be used and additional capital expenditure can be reduced. In addition, applying the same architecture as existing manufacturing equipment to newly constructed manufacturing equipment may lead to improvement of the reliability of the manufacture of a secondary battery, detection/improvement of problematic processes, and effective introduction of new processes.

Those of ordinary skill in the art would be able to easily derive a system including an integrated PLC performing the functions of each of the first controller 141 and the second controller 143 and a system including an integrated server performing the functions of each of the servers 150, 180 and 190, based on the above description.

### (Second Embodiment)

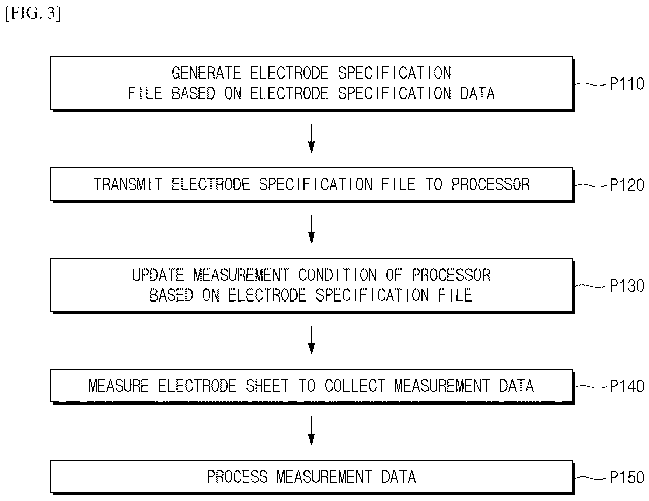

FIG. 3 is a flowchart of a roll map generating method according to example embodiments.

Referring to FIGS. 1 to 3, in P110, the electrode specification file ESF may be generated based on the electrode specification data ESD. The electrode specification file ESF may be generated by the server 180. The server 180 may be configured to generate the electrode specification file ESF based on the electrode specification data ESD of the server 190. The electrode specification file ESF may be, for example, in a JSON file format but is not limited thereto.

In P120, the electrode specification file ESF may be transmitted to the processor 133. The electrode specification file ESF may be transmitted from the server 180 to the processor 133 via the communication server 160. The electrode specification file ESF may be transmitted to the processor 133 by a message transmission method such as unicast.

Next, in P130, measurement conditions of the processor 133 may be updated based on the electrode specification file ESF. The updating of the measurement conditions may include updating the number of the coated lanes L1, L2, and L3, the number of uncoated parts U1, U2, U3, and U4, the width of each of the coated lanes L1, L2, and L3, the width of each of the uncoated parts U1, U2, U3, and U4, and the range of normal measurement amounts (i.e., loading amounts).

Next, in P140, the electrode sheet ES may be measured to collect measurement data. The measuring of the electrode sheet ES may include scanning the electrode sheet ES by the sensing part 131 of the measuring device 130.

Next, in P150, the measurement data may be processed. The measuring of the measurement data may include matching the measurement data to the sections S11, S12, S13, S14, S15, S16, S17, S21, S22, S23, S24, S25, S26, and S27, and calculating representative values of the sections S11, S12, S13, S14, S15, S16, S17, S21, S22, S23, S24, S25, S26, and S27. The measurement data may be processed by the processor 133 to generate the coordinate-related measurement data CMD.

Those of ordinary skill in the art would be able to easily derive an embodiment in which the first controller 141 collects the coordinate-related measurement data CMD based the above description. In this case, the processor 133 may calculate a representative value of each of the plurality of sections S11, S12, S13, S14, S15, S16, S17, S21, S22, S23, S24, S25, S26, and S27, and transmit the representative values to the first controller 141. The first controller 141 may be configured to match the representative value of each of the sections S11, S12, S13, S14, S15, S16, S17, S21, S22, S23, S24, S25, S26, and S27 to the start coordinate and the end coordinate thereof.

Thereafter, the server 170 may be configured to generate a roll map based on the coordinate-related measurement data CMD.

### (Third Embodiment)

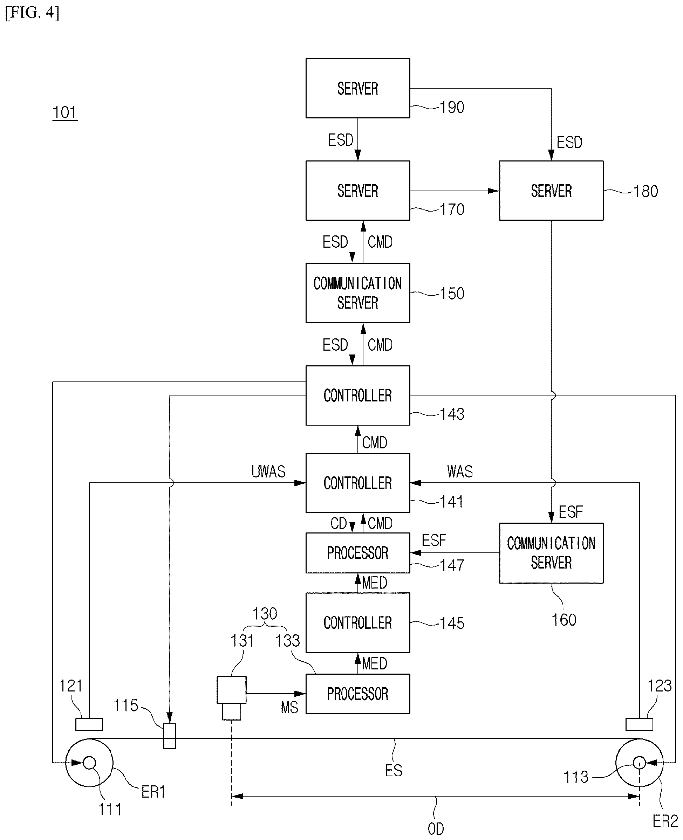

FIG. 4 is a diagram for describing a roll map generating system 101 according to other example embodiments.

Referring to FIG. 4, the roll map generating system 101 may include an unwinder 111, a rewinder 113, a processing apparatus 115, a first rotary encoder 121, a second rotary encoder 123, a measuring device 130, a first controller 141, a second controller 143, a third controller 145, a processor 147, communication servers 150 and 160, and servers 170, 180 and 190.

The unwinder 111, the rewinder 113, the processing apparatus 115, the first rotary encoder 121, the second rotary encoder 123, the measuring device 130, the first controller 141, the second controller 143, the communication servers 150 and 160, and the servers 170, 180 and 190 are substantially the same as those described above with reference to FIG. 1, and thus a description thereof is omitted here.

The third controller 145 may be, for example, a PLC. The third controller 145 may be configured to relay communication between a processor 133 and the processor 147. The third controller 145 may be configured to transmit data about processing, driving, and stopping of an electrode sheet ES to the processor 133.

The processor 133 is substantially the same as that of FIG. 1 but may not collect coordinate-related measurement data CMD. The processor 133 may be configured to transmit measurement data MED collected based on a measurement signal MS to the third controller 145, and the measurement data MED may be transmitted to the processor 147 via the third controller 145. As described above, the measurement data MED may be collected based on a measurement signal MS and be temporally ordered time series data. An electrode specification file ESF may be transmitted to the processor 147 through the communication server 160, and measurement conditions of the processor 147 may be updated based on the electrode specification file ESF.

The processor 147 may be configured to receive the measurement data MED and coordinate data CD. The processor 147 may be configured to collect coordinate-related measurement data CMD based on the measurement data MED and the coordinate data CD. The collection of the coordinate-related measurement data CMD is substantially the same as that described above with reference to FIG. 1, except that the coordinate-related measurement data CMD is collected by the processor 147, and thus, a redundant description thereof is omitted here.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A roll map generating system comprising:
a first server configured to store electrode specification data, wherein the electrode specification data includes information about a process of an electrode sheet;
a second server configured to generate an electrode specification file based on the electrode specification data; and
a first processor configured to process measurement data of the electrode sheet,
wherein the second server is configured to transmit the electrode specification file to the first processor.

2. The roll map generating system of claim 1, wherein the electrode specification file is in a JavaScript Object Notation (JSON) format.

3. The roll map generating system of claim 1, wherein a measurement condition of the first processor is updated based on the electrode specification file.

4. The roll map generating system of claim 1, wherein the electrode specification data includes the number of coated lanes of the electrode sheet, the number of uncoated parts of the electrode sheet, a width of each of the coated lanes of the electrode sheet, and a width of each of the uncoated parts of the electrode sheet.

5. The roll map generating system of claim 1, further comprising a sensing part configured to sense the electrode sheet to generate a measurement signal,
wherein the first processor is configured to collect the measurement data based on the measurement signal.

6. The roll map generating system of claim 1, further comprising:
a sensing part configured to sense the electrode sheet to generate a measurement signal; and
a second processor configured to collect the measurement data based on the measurement signal.

7. The roll map generating system of claim 6, further comprising:
a first controller configured to collect coordinate data indicating a position on the electrode sheet;
a second controller configured to control the process of the electrode sheet; and
a third controller configured to relay communication between the first processor and the second processor.

8. The roll map generating system of claim 1, wherein the electrode specification file is transmitted to the first processor by a message transmission method.

9. A roll map generating method comprising:
generating an electrode specification file based on electrode specification data including information about a process of an electrode sheet;
transmitting the electrode specification file to a processor; and
updating a measurement condition of the processor based on the electrode specification file.

10. The roll map generating method of claim 9, wherein the electrode specification file is in a JavaScript Object Notation (JSON) format.

11. The roll map generating method of claim 9, wherein the electrode specification file is transmitted to the processor by a message transmission method.

12. The roll map generating method of claim 9, wherein the electrode specification data includes data of the number of coated lanes of the electrode sheet, the number of uncoated parts of the electrode sheet, a width of each of the coated lanes of the electrode sheet, and a width of each of the uncoated parts of the electrode sheet.

13. The roll map generating method of claim 12, wherein the processor is configured to process measurement data of the electrode sheet based on the updated measurement condition.

14. The roll map generating method of claim 13, wherein the processing of the measurement data of the electrode sheet includes matching measured values of the measurement data to a plurality of sections of the electrode sheet.

15. The roll map generating method of claim 14, wherein the measured values of the measurement data are matched to the plurality of sections of the electrode sheet, based on the number of the coated lanes of the electrode sheet, the number of the uncoated parts of the electrode sheet, the width of each of the coated lanes of the electrode sheet, and the width of each of the uncoated parts of the electrode sheet.
